# EUROPÄISCHE PATENTSCHRIFT

(11) **EP 3 189 931 B1**
(45) Veröffentlichungstag und Bekanntmachung des Hinweises auf die Patenterteilung: **03.10.2018**
(21) Anmeldenummer: 17150514.2
(22) Anmeldetag: 06.01.2017
(51) Int. Cl.: B23K 35/38, B23K 9/167, B23K 9/173, B23K 9/23

(54) **VERFAHREN ZUM SCHWEISSEN AUSTENITISCHER WERKSTOFFE**
METHOD FOR WELDING AUSTENITIC MATERIALS
PROCÉDÉ DE SOUDAGE DE MATIÈRES AUSTÉNITIQUES

(30) Priorität: 09.01.2016 DE 102016000218
(43) Veröffentlichungstag der Anmeldung: 12.07.2017
(73) Patentinhaber: Messer Group GmbH, 65812 Bad Soden (DE)
(72) Erfinder: Kampffmeyer, Dirk, 52441 Linnich (DE); Wankum, Achim, 47809 Krefeld (DE); Hildebrandt, Bernd, 47918 Tönisvorst (DE)
(74) Vertreter: Münzel, Joachim R.

(56) Entgegenhaltungen:
- EP-A1- 0 826 456
- EP-A1- 2 481 514
- US-A- 6 111 219

## Beschreibung

Die Erfindung betrifft ein Verfahren zum Plasmaschweißen austenitischer Werkstoffe unter Schutzgas und unter Einsatz eines Schweißzusatzwerkstoffes.

In der industriellen Anwendung sind zahlreichen Schweißgase für das Schweißen unter Schutzgasen bekannt, wobei je nach der Zusammensetzung des zu schweißenden Werkstücks, der jeweiligen Schweißaufgabe und des jeweils angewandten Schweißverfahrens unterschiedliche Gase oder Gasgemische zum Einsatz kommen.

Beim Wolfram-Inertgas-Schweißen (WIG-Schweißen) kommt als Schutzgas hauptsächlich ein Inertgas wie Argon oder Helium zum Einsatz, das über eine Schutzgasdüse dem Arbeitsbereich unmittelbar zugeführt wird. Der Vorteil von Helium liegt in der höheren Energieeinbringung in den Grundwerkstoff, so dass hier - im Vergleich zum reinen Argon-Schutzgas - bei gleicher Stromstärke höhere Einbrandtiefen erzielt werden. Je nach Bedarf und Anwendung werden häufig Mischgase verwendet, die aus Argon und Helium bestehen. Eine Beimischung von Aktivgasen, wie Kohlendioxid, Sauerstoff oder Stickstoff wurde beim WIG-Schweißen bislang in der Regel vermieden, um die glühende Wolframelektrode keinen chemischen Reaktionen auszusetzen.

Um die Kosten des Schutzgases insbesondere bei höheren Einbrandtiefen zu reduzieren, kann beim WIG-Schweißen von austenitischen Werkstoffen der Heliumanteil zumindest teilweise durch Wasserstoff oder andere Gase ersetzt werden. Wasserstoff führt, ähnlich wie Helium, zu einem im Vergleich zu Argon verstärktem Einbrand und wirkt reduzierend auf die Oberfläche der Schweißnaht. Zudem bietet Wasserstoff einen zusätzlichen Schutz gegenüber den negativen Einflüssen durch Sauerstoff, der aus in der Umgebung des Schweißbereichs vorhandenen Verunreinigungen stammt, beispielsweise aus Ölen, Feuchte oder Verzunderungen, da er bereits in der Umgebung der Prozesszone mit dem Sauerstoff reagiert und diesen nicht bis zur Schmelze gelangen lässt.

Beispielsweise wird in der EP 1 707 295 A ein Schutzgasgemisch für das WIG-Schweißen von Metallen, insbesondere von hochlegierten Stählen, beschrieben, das überwiegend aus Argon besteht und einen Wasserstoffanteil von 1,5 Vol.-% bis zu 2 Vol.-% sowie einen Heliumanteil von 2 Vol.-% bis zu 5 Vol.-% aufweist.

Aus der EP 0 826 456 A1 ist ein Schutzgasgemisch zur Verwendung beim WIG - Schweißen von austenitischen Werkstoffen bekannt, das sich durch einen Volumenanteil von 2,0 Vol.-% bis 3,7 Vol.-% Stickstoff; 0,5 Vol.-% bis 1,2 Vol.-% Wasserstoff, Rest Argon, auszeichnet. Der Stickstoffanteil im Schutzgas dient bei diesem Gegenstand dazu, beim Schweißvorgang der Bildung von sogenannten Ferritnestern im Schweißbereich entgegenzuwirken und auf diese Weise die Korrosionsbeständigkeit der Schweißnaht zu erhöhen.

Um höhere Schweißgeschwindigkeiten zu ermöglichen, wird häufig über eine Schleppgasdüse ein zusätzliches Schutzgas zugeführt. Das aus der nachgeführten Schleppgasdüse austretende Schutzgas schützt das langgezogene Schmelzbad dort, wo das aus Schutzgasdüse austretende Schutzgas keinen Einfluss mehr hat. Als der Schleppgasdüse zugeführtes Schutzgas kann das gleiche oder ein anderes Gas wie das der Schutzgasdüse zugeführte Schutzgas zum Einsatz kommen. Typische Schutzgase für Schleppgasdüsen sind beim Schweißen austenitischer Werkstoffe Argon oder Gemisch aus Argon und Wasserstoff.

Auch bei Verwendung der bekannten Schutzgase gilt weiterhin, dass sich der Schutz der Schmelze vor der negativen Einflüssen der Umgebungsatmosphäre umso schwieriger gestaltet, je empfindlicher der Werkstoff gegenüber Verunreinigung ist. Auch beim Einsatz von Schleppgasdüsen kommt es zur Ausbildung turbulenter Strömungen, durch die Sauerstoff zum Schmelzbad transportiert werden kann. Insbesondere bei höheren Schweißgeschwindigkeiten wird die Schmelze daher häufig durch Sauerstoff aus der Umgebungsatmosphäre beeinträchtigt. Ein zusätzlicher Schutz der Schmelze vor der Atmosphäre ist daher wünschenswert.

Der Erfindung liegt somit die Aufgabe zugrunde, ein Verfahren zum Plasmaschweißen austenitischer Werkstoffe zu schaffen, das bei gleicher Schweißqualität höhere Schweißgeschwindigkeiten zulässt und das mit einem geringen baulichen Aufwand zu realisieren ist.

Die Aufgabe der Erfindung wird durch ein Schutzgas mit den Merkmalen des Patentanspruchs 1 gelöst. Vorteilhafte Ausgestaltungen der Erfindung werden in den Unteransprüchen beansprucht.

Erfindungsgemäß erfolgt also eine Plasmaschweißung eines aus einem austenitischen Werkstoff bestehenden Werkstücks unter Verwendung eines Schutzgases und eines Schweißzusatzwerkstoffs, wobei als Schweißzusatzwerkstoff ein Titan enthaltender Zusatzwerkstoff und als Schutzgas ein Stickstoff sowie Argon und/oder Helium enthaltendes Gasgemisch eingesetzt wird, wobei der Stickstoffanteil mindestens 0,05 Vol.-% und weniger als 10 Vol.-% und der Wasserstoffanteil zwischen 0,1 Vol.-% und 10 Vol.-% beträgt und der Schweißzusatzwerkstoff einen Titananteil zwischen 0,05 Vol.-% und 5 Vol.-% aufweist.

Schweißzusatzstoffe, die Titan enthalten, sind bereits seit langem bekannt und werden beispielsweise in der EP 2347022 B1, DE 2238688 A1, der EP 2481514 A1, oder der DE 2242236 A1 beschrieben. Überraschend wurde nun festgestellt, dass die Kombination aus einem Titan enthaltenden Schweißzusatz mit einem Stickstoff enthaltenden Schutzgas insbesondere bei hohen Schweißgeschwindigkeiten eine positive Wirkung auf das Schweißergebnis hat. Insbesondere werden Einflüsse von Luftsauerstoff auf das Schmelzbad wirkungsvoll unterdrückt. Zudem wird das Fließverhalten verbessert, und es entstehen glatte und flache Schweißnähte.

Die beobachtete positive Wirkung der beschriebenen Kombination ist vermutlich darauf zurückführen, dass das im Schweißzusatzwerkstoff enthaltende Titan mit dem im Schutzgas enthaltenen Stickstoff zu Titannitrid reagiert, das sich als eine Art Schlacke über die Schmelze legt. Das Titannitrid bildet auf diese Weise eine Schutzschicht, die die Schmelze wirkungsvoll von der Umgebungsatmosphäre abschirmt und zudem die Form der Naht positiv beeinflusst. Dieser Effekt lässt sich im Übrigen unabhängig davon beobachten, ob ein zusätzliches Schutzgas über eine nachgeführte Schleppdüse aufgetragen wird, oder nicht. Die positive Wirkung ergibt sich gleichermaßen beim WIG-Schweißen wie auch beim Plasmaschweißen austenitischer Werkstoffe.

Der Titan enthaltende Schweißzusatzwerkstoff kann in jeder beim WIG-Schweißen oder beim Plasmaschweißen üblichen Form zugeführt werden, insbesondere in Form von Schweißdrähten, Schweißstäben, Draht- und Stabelektroden, Schweißpulvern, Schweißpulverzusatzmitteln oder Flussmitteladditiven.

Das erfindungsgemäß Verfahren ist für alle austenitische Werkstoffe geeignet, insbesondere für austenitische Stähle mit oder ohne Gehalt an Titan, und eignet sich besonders für schnelle Schweißprozesse mit einem langen Schmelzbad.

Das Schutzgas wird mittels einer Schutzgasdüse direkt dem Arbeitsbereich zugeführt. Der Stickstoffanteil im Schutzgas sollte mindestens 0,05 Vol.-%, bevorzugt mindestens 0,1 Vol.-%, besonders bevorzugt mindestens 1 Vol.-% betragen. Um einem raschen Verschleiß der Wolframelektrode entgegenzuwirken, sollte der Stickstoffanteil im Schutzgas jedoch nicht über 10 Vol.-% hinausgehen und bevorzugt unter 5 Vol.-%, besonders bevorzugt unter 2 Vol.-% betragen.

Die Erfindung sieht vor, dass das Schutzgas neben Argon und Stickstoff zusätzlich Wasserstoff enthält. Beim Schutzgas handelt es sich also um ein Dreistoffgemisch. Der Wasserstoff verringert die Viskosität der Schmelze und trägt auf diese Weise zu einem positiven Schweißergebnis bei. Der Wasserstoffanteil liegt zwischen 0,1 Vol.-% 10 Vol.-%, besonders bevorzugt zwischen 0,1 Vol.-% und 5 Vol.-%.

Ein besonders vorteilhaftes Dreistoffgemisch enthält zwischen 0,1 Vol.-% und 5 Vol.-% Wasserstoff, 0,1 Vol.-% bis 2 Vol.-% Stickstoff, Rest Argon.

Der Titananteil des Schweißzusatzes kann in einem weiten Bereich variieren; erfindungsgemäß enthält der Schweißzusatzwerkstoff einen Titananteil zwischen 0,05 Vol.-% und 5 Vol.-%.

Durch das erfindungsgemäße Verfahren kann in vielen Fällen auf den Einsatz einer Schleppgasdüse verzichtet werden. Kommt jedoch zusätzlich zur Schutzgasdüse eine Schleppdüse zum Einsatz, kann über diese das gleiche oder ein anderes Schutzgas zugeführt werden, wie über die Schutzgaszugführung. Insbesondere kann auch dieses Schutzgas einen Stickstoffanteil von beispielsweise 0,1 Vol.-% bis 5 Vol.-% enthalten.

### Beispiel:

Ein Werkstück bestehend aus dem Werkstoff Nickel 36 wird mit einem Schweißzusatzdraht, enthaltend 2,4 Vol.-% Titan sowie unter einem Schutzgas, enthaltend 2 Vol.-% Wasserstoff, 1,5 Vol.-% Stickstoff, Rest Argon unter Einsatz einer Wolframelektrode geschweißt. Es zeigt sich eine niedrige Viskosität der Schmelze sowie die Entstehung einer Schutzschicht aus Titannitrid über dem Schmelzbad, die selbst keine negativen Auswirkungen auf das Schweißergebnis hervorruft, durch die die Schmelze jedoch hervorragend von der Umgebungsatmosphäre abgeschirmt wird. Auf diese Weise ist es möglich, bei gleicher Schweißqualität die Schweißgeschwindigkeit deutlich zu steigern.

## Patentansprüche

1. Verfahren zum Plasmaschweißen austenitischer Werkstoffe unter Schutzgas und unter Einsatz eines Schweißzusatzwerkstoffes,
**dadurch gekennzeichnet,**
**dass** ein Titan enthaltender Schweißzusatzwerkstoff zum Einsatz kommt und das eingesetzte Schutzgas ein aus Argon, Wasserstoff und Stickstoff bestehendes Dreistoffgemisch ist, wobei der Stickstoffanteil mindestens 0,05 Vol.-% und weniger als 10 Vol.-% und der Wasserstoffanteil zwischen 0,1 Vol.-% und 10 Vol.-% beträgt und der Schweißzusatzwerkstoff einen Titananteil zwischen 0,05 Vol.-% und 5 Vol.-% aufweist.

2. Verfahren nach Anspruch 1, **dadurch gekennzeichnet, dass** das Schutzgas einen Stickstoffanteil von mindestens 0,1 Vol.-%, bevorzugt von mindestens 1 Vol.-% aufweist.

3. Verfahren nach Anspruch 1 oder 2, **dadurch gekennzeichnet, dass** der Stickstoffanteil im Schutzgas weniger als 5 Vol.-%, bevorzugt weniger als 2 Vol.-% beträgt.

4. Verfahren nach einem der vorhergehenden Ansprüche, **dadurch gekennzeichnet, dass** das Schutzgas einen Wasserstoffanteil zwischen 0,1 Vol.-% und 5 Vol.-% aufweist.

5. Verfahren nach einem der vorhergehenden Ansprüche, **dadurch gekennzeichnet, dass** das Schutzgas zwischen 0,1 Vol.-% und 2 Vol.-% Stickstoff und zwischen 0,1 Vol.-% und 5 Vol.-% Wasserstoff, Rest Argon enthält.

## Claims

1. Method of plasma welding of austenitic materials under shielding gas and using a welding filler material,
**characterized in that**
a titanium-containing welding filler material is used and the shielding gas used is a three-substance mixture consisting of argon, hydrogen and nitrogen, wherein the nitrogen content is at least 0.05% by volume and less than 10% by volume and the hydrogen content is between 0.1% by volume and 10% by volume and the welding filler material has a titanium content between 0.05% by volume and 5% by volume.

2. Method according to Claim 1, **characterized in that** the shielding gas has a nitrogen content of at least 0.1% by volume, preferably of at least 1% by volume.

3. Method according to Claim 1 or 2, **characterized in that** the nitrogen content in the shielding gas is less than 5% by volume, preferably less than 2% by volume.

4. Method according to any of the preceding claims, **characterized in that** the shielding gas has a hydrogen content between 0.1% by volume and 5% by volume.

5. Method according to any of the preceding claims, **characterized in that** the shielding gas contains between 0.1% by volume and 2% by volume of nitrogen and between 0.1% by volume and 5% by volume of hydrogen, the balance being argon.

## Revendications

1. Procédé de soudage au plasma de matériaux austénitiques sous un gaz protecteur et en utilisant un matériau d'apport de soudure,
**caractérisé en ce qu'**un matériau d'apport de soudure contenant du titane est utilisé et le gaz protecteur utilisé est un mélange de trois matières constitué par de l'argon, de l'hydrogène et de l'azote, la proportion d'azote étant d'au moins 0,05 % en volume et de moins de 10 % en volume, et la proportion d'hydrogène étant comprise entre 0,1 % en volume et 10 % en volume, et le matériau d'apport de soudure présentant une proportion de titane comprise entre 0,05 % en volume et 5 % en volume.

2. Procédé selon la revendication 1, **caractérisé en ce que** le gaz protecteur présente une proportion d'azote d'au moins 0,1 % en volume, de préférence d'au moins 1 % en volume.

3. Procédé selon la revendication 1 ou 2, **caractérisé en ce que** la proportion d'azote dans le gaz protecteur est inférieure à 5 % en volume, de préférence inférieure à 2 % en volume.

4. Procédé selon l'une quelconque des revendications précédentes, **caractérisé en ce que** le gaz protecteur présente une proportion d'hydrogène comprise entre 0,1 % en volume et 5 % en volume.

5. Procédé selon l'une quelconque des revendications précédentes, **caractérisé en ce que** le gaz protecteur contient entre 0,1 % en volume et 2 % en volume d'azote, et entre 0,1 % en volume et 5 % en volume d'hydrogène, le reste étant de l'argon.
